(19) Europäisches Patentamt
European Patent Office
Office européen des brevets

(11) **EP 0 378 015 B2**

(12) **NOUVEAU FASCICULE DE BREVET EUROPEEN**

(45) Date de publication et mention de la décision concernant l'opposition:
**26.07.2000 Bulletin 2000/30**

(51) Int. Cl.[7]: **C08J 5/18**

(45) Mention de la délivrance du brevet:
**18.01.1995 Bulletin 1995/03**

(21) Numéro de dépôt: **89403127.7**

(22) Date de dépôt: **14.11.1989**

(54) **Film élastomère thermoplastique perméable à la vapeur d'eau à base de polyétheresteramide, son procédé de fabrication et articles comprenant un tel film**

Wasserdampfdurchlässiger thermoplastischer Elastomerfilm aus Polyetheresteramid, Verfahren zur Herstellung und diesen Film enthaltende Artikel

Thermoplastic, elastomeric water vapour-permeable film from polyether ester amide, process for its preparation and articles containing this film

(84) Etats contractants désignés:
**AT BE CH DE ES FR GB GR IT LI LU NL SE**

(30) Priorité: **25.11.1988 FR 8815441**

(43) Date de publication de la demande:
**18.07.1990 Bulletin 1990/29**

(73) Titulaire: **ELF ATOCHEM S.A.**
**92800 Puteaux, Hauts-de-Seine (FR)**

(72) Inventeur:
**Flesher, Joseph Richard**
**c/o Neci Sullivan Hall**
**Winooski VT 05446 (US)**

(56) Documents cités:
**EP-A- 0 025 828**     **EP-A- 0 116 288**
**EP-A- 0 167 714**     **DE-A- 3 615 471**
**FR-A- 2 555 186**

- **DERWENT WPIL, résumé no. AN-85-125314/21, Derwent Publications Ltd, Londres,GB; & JP-A-62 074 644**
- **DERWENT WPIL, résumé no. AN-89-027811/04, Derwent Publications Ltd, Londres,GB; & JP-A-63 301 223**
- **DERWENT WPIL, résumé no. AN-85-125314/21, Derwent Publications Ltd, Londres,GB; & JP-A-60 063 225**

**Description**

La présente invention a pour objet un matériau perméable à la vapeur d'eau et imperméable à l'eau comprenant (i) un film d'un élastomère thermoplastique à base de polyétheresteramide (ii) associé par collage à chaud ou à l'aide d'un agent de collage approprié, à un tissu, à du cuir ou à une matiève plastique

Dans tout ce qui suit, sous la dénomination film et selon la définition qu'en donne Modern Plastics Encyclopedia, on entend une section plane dont l'épaisseur est très faible par rapport à la longueur et la largeur.

On considère que l'épaisseur d'un film est en général inférieur à 250 μm.

Dans le brevet européen publié sous le n° 46 071, on a décrit un film perméable à la vapeur d'eau consistant en un mélange de polyuréthane et d'un polymère incompatible avec le polyuréthane, tel que le polystyrène.

Dans le brevet européen publié sous le n° 141 592, on a proposé un film perméable à la vapeur d'eau et constitué par un mélange de polymères incompatibles à base de copolymère éthylène - acétate de vinyle et de polymère vinylique.

Dans le brevet européen publié sous le n° 52 915, on a décrit un film de polyuréthane non-poreux et perméable aux gaz.

Or la perméabilité aux gaz et en particulier à la vapeur d'eau de ces films n'est pas très satisfaisante et ce notamment pour les films de faible, voire de très faible épaisseur.

La demande de brevet DE 3 615 471 A1 décrit une structure de pansement comportent successivement trois couches :

    1/ une couche de Polyetherblocamide 12
    2/ une couche d'adhésif 16
    3/ une couche de recouvrement 22 de l'adhésif, cette couche 22 étant divulguée comme étant pelable en un matériau comme, sans plus de précision.

La demande de brevet EP 0 167 714 A2 décrit des films en polyétherbloc amide en tant qu'accumulateur d'humidité afin de stocker momentanément le vapeur d'eau pour ensuite être progressivement éliminée conformement à la capacité de diffusion de ces films.

Le brevet US 4,713,068 décrit l'induction d'un substrat poreux de type tissu par une solution aqueuse d'alcool polyvinylique (PVOH) qui en séchent forme une couche imperméable à l'eau liquide et perméable à la vapeur d'eau.

Le film de l'invention présente, à épaisseur égaie, une perméabilité à la vapeur d'eau améliorée par rapport aux films mentionnés ci-dessus et ses propriétés restent très satisfaisantes pour de faibles épaisseurs.

Le film conforme à l'invention est en matière polymère de type élastomère thermoplastique à base de polyétheresteramide.

Par polyétheresteramides, on entend aussi bien les polyétheresteramides statistiques (c'est-à-dire formés par l'enchaînement aléatoire des divers constituants monomères) que les polyétheresteramides séquencés c'est-à-dire formés de blocs présentant une certaine longueur de chaîne de leurs divers constituants.

Les polyétheresteramides sont le produit de la copolycondensation de séquences polyamides à extrémités réactives avec des séquences polyéthers à extrémités réactives, telles que entre autres :

    .    séquences polyamides à fins de chaîne dicarboxyliques avec des séquences polyétherdiols.

De tels produits ont été décrits par exemple dans les brevets français n° 74 18913 et 77 26678 dont le contenu doit être ajouté à la présente description ainsi que dans les demandes de brevet EP 25 288, J 60-063225 et J 63-301223.

La masse moléculaire moyenne en nombre de ces séquences polyamides est généralement comprise entre 500 et 10 000 et plus particulièrement entre 600 et 5 000. Les séquences polyamides des polyétheresteramides sont formées de préférence de polyamide 6, 6.6, 6.12, 11, 12 ou 12.12 (PA-6, PA-6.6, PA-6.12, PA-11, PA-12, PA-12,12) ou de copolyamides résultant de la polycondensation de leurs monomères.

La masse moléculaire moyenne en nombre des polyéthers est comprise généralement entre 200 et 6 000 et plus particulièrement entre 600 et 3 000.

Les séquences polyéthers consistent de préférence en polytétraméthylène glycol (PTMG), polypropylène glycol (PPG), ou polyéthylène glycol (PEG), homo- ou copolymérisés.

La viscosité inhérente des polyétheresteramides est avantageusement comprise entre 0,8 et 2,05.

La viscosité inhérente est mesurée dans le métacrésol à 20°C avec une concentration initiale de 0,5 g pour 100 g de métacrésol. Elle est exprimée en dlg$^{-1}$.

Les polyétheresteramides selon l'invention peuvent être formés de 5 à 85 % en poids de polyéther, et de 95 à 15 % en poids de polyamide, et de préférence de 20 à 85 % en poids de polyéther et de 80 à 15 % en poids de polyamide.

Parmi les polyétheresteramides qui conviennent pour l'invention, la demanderesse a remarqué que certains étaient particulièrement perméables à la vapeur d'eau : ce sont les polyéther bloc amides dont les séquences polyéthers contiennent du PEG, homo- ou copolymérisé, et de manière préférentielle ceux dont les séquences polyamides dérivent de PA-12, PA-11, PA-12,12, homo- ou copolymérisés, tels que par exemple le co-PA-6,12.

Le mélange de matière polymère qui constitue le film de l'invention à base de polyétheresteramide peut éventuellement contenir des charges organiques ou minérales.

A titre d'exemples de charges, on peut citer notamment la silice, l'oxyde de titane.

Le mélange peut également contenir divers additifs tels que agents anti-UV, agents démoulants, modifiants choc... ainsi que des colorants ou pigments.

On peut ajouter jusqu'à 60 % du poids total du film de charges et/ou additifs divers.

Les films de l'invention particulièrement préférés par la demanderesse sont ceux dont la reprise à l'humidité, (mesurée par immersion dans l'eau d'une éprouvette de dimensions 1,6 X 40 X 170 mm à 23°C pendant 24 heures) est inférieure à 120 % du poids initial de l'éprouvette avant immersion, de préférence inférieure à 110 % et avantageusement inférieure à 50 %.

La mise en forme de film du mélange décrit ci-dessus peut s'effectuer selon tout procédé d'extrusion connu tel que l'extrusion-calandrage à plat, l'extrusion-plaxage, l'extrusion-soufflage. On peut traiter ledit mélange à l'état fondu dans une extrudeuse mono- ou double-vis.

En général, la température d'extrusion est comprise entre 190 et 220°C, et de préférence entre 200 et 210°C.

Comme écrit plus haut, les films ont une épaisseur inférieure à environ 250 μm.

L'épaisseur des films conformes à l'invention peut être avantageusement comprise entre 8 et 150 μm et de préférence comprise entre 8 et 100 μm et mieux entre 8 et 60 μm.

Les films à base de polyétheresteramide conformes à l'invention présentent de bonnes propriétés mécaniques, physiques et chimiques.

Parmi les propriétés qu'offrent les films de l'invention, on peut notamment citer :

- la souplesse et la résistance au choc à basse température,
- de bonnes propriétés dynamiques,
- la grande facilité de mise en oeuvre,
- la bonne aptitude à recevoir des charges et additifs divers,
- et la perméabilité à la vapeur d'eau et à de nombreux gaz.

Les films de faible épaisseur (inférieure à 60 μm) présentent non seulement de bonnes propriétés de perméabilité à la vapeur d'eau mais aussi de bonnes propriétés physiques et chimiques, et notamment mécaniques.

Ils sont particulièrement préférés dans le cadre de la présente invention car ils permettent une économie de matière non négligeable par rapport aux autres films, par exemple à base de polyuréthane qui, à perméabilité égale, ont une épaisseur plus grande.

Toutes les propriétés énumérées plus haut rendent possible l'utilisation des films à base de polyétheresteramide conformes à l'invention dans de nombreuses applications et notamment pour des articles et objets pourvus de tel(s) film(s) destinés au contact avec le corps humain ou animal.

Les matériaux de l'invention sont avantageusement utilisés dans la fabrication de vêtements et/ou de chaussures, notamment destinés à des activités de sport et de loisirs.

Les films peuvent être collés sur des supports tel que tissu, cuir, matière plastique..., par exemple à chaud, ou à l'aide d'un agent de collage approprié. Les films ainsi collés peuvent être placés soit à l'intérieur du vêtement ou de la chaussure, soit à l'extérieur.

On peut également intercaler les films de l'invention entre des couches de matériaux identiques ou non ; dans ce cas, les films peuvent rester libres ou être collés tel qu'indiqué ci-dessus à l'un et/ou l'autre des matériaux.

. Les films de l'invention conviennent avantageusement pour des usages médicaux.

Ils sont particulièrement adaptés pour l'élaboration de pansements adhésifs ou non, de compresses... ainsi que pour le linge utilisé dans les blocs opératoires.

Ces films peuvent également intervenir dans la fabrication des supports matériels de médicaments curatifs ou préventifs administrés par voie trans-cutanée. Dans ce cas, les principes actifs peuvent être incorporés dans le film lors de sa mise en forme.

. Les films selon l'invention sont employés de façon avantageuse pour la fabrication de sièges et plus particulièrement de sièges automobiles.

On peut, par exemple, lors de la fabrication du siège automobile, plaquer le tissu ou revêtement superficiel contre le moule puis le recouvrir d'un film selon l'invention avant de remplir de mousse l'intérieur du moule ce qui a pour effet de bien plaquer ledit film contre le tissu ou revêtement superficiel.

. Les films conformes à l'invention peuvent également être utilisés de façon avantageuse dans le domaine du bâtiment.

On peut, par exemple, placer de tels films sous les matériaux de couverture et sur toute la surface du toit afin de permettre l'élimination de l'humidité du bâtiment et d'augmenter l'étanchéité du toit, sans pour autant que le film retienne ladite humidité.

Les exemples suivants illustrent l'invention.

EXEMPLE 1

A. Dans une extrudeuse, on introduit des granulés de polyétheresteramide.

L'ensemble est porté à une température comprise entre 190 et 220°C.

En sortie de filière, on obtient un film à base de polyétheresteramide d'épaisseur égale à environ 55 μm.

Le polyétheresteramide utilisé est obtenu par copolycondensation de séquences de polyamide 12 $\alpha$, $\omega$ dicarboxylées de $\overline{Mn}$ = 600, et de séquences de polytétraméthylène glycol $\alpha$, $\omega$ dihydroxylées de $\overline{Mn}$ = 2000

Le polyétheresteramide est constitué de 23% en poids de séquences de PA-12 et de 77 % en poids de séquences de PTMG.

On teste la perméabilité à la vapeur d'eau du film décrit ci-dessus à 22°C $\pm$ 2°C et à 38°C $\pm$ 1°C selon le test suivant, mis au point par la demanderesse.

Dans le film ainsi obtenu, on découpe un disque de diamètre inférieur ou égal à 10 cm dont on calcule la surface S.

Le disque est ensuite placé sur un support ajustable à l'intérieur d'une enceinte étanche dont on maintient constants le taux d'hygrométrie (100 % d'humidité relative) et la température $\theta$ avec $\theta$ = 22°C $\pm$ 2°C et $\theta$ = 38°C $\pm$ 1°C.

On laisse une face du disque en contact avec l'atmosphère humide de l'enceinte, tandis que l'autre est balayée par un courant d'azote sec de débit constant égal à environ 100 ml/mn. La vapeur d'eau diffuse à travers l'épaisseur **e** du disque puis est entraînée par le courant d'azote lorsqu'elle atteint la face du disque balayée par le courant d'azote.

Quand la quantité de vapeur d'eau entraînée s'est stabilisée (en général au bout de quelques heures) on relie le débit d'azote à un coulomètre afin de mesurer la quantité d'eau **q** entraînée pendant une durée **t** fixée (en général comprise entre 10 sec et 10 mn).

On effectue 5 à 6 mesures pour chaque essai et on calcule la valeur moyenne de la perméabilité **p, p'** à la vapeur d'eau pour une température $\theta$ et un taux d'hygrométrie donnés :

$$p = \frac{q \times 24 \times 60}{t \times S} \text{ (exprimée en g/m}^2\text{. 24 h)}$$

et

$$p' = \frac{q \times 24 \times 60 \times e}{t \times S} = p \times e \text{ (exprimée en g.mm/m}^2\text{. 24 h)}$$

Les résultats sont réunis dans le Tableau I.

On mesure également la perméabilité à la vapeur d'eau dudit film conformément à la norme NF G 52-019 (exprimée en g/m$^2$/24 h) ainsi que la résistance évaporative $R_{et}$ conformément à la norme DIN 54-101 Teil 1 (exprimée en m$^2$. mbar/W x 10$^3$).

Les résultats sont réunis dans le Tableau II.

B. A titre de comparaison, on mesure la perméabilité à la vapeur d'eau d'un film polyuréthane à base polyester d'épaisseur égale à environ 53 μm dans les mêmes conditions qu'en A.

La densité du polyuréthane est égale à 1,19, sa dureté Shore A mesurée selon la norme ASTM D 2240 est égale à 86, et sa plage de fusion est comprise entre 200 et 230°C.

Les résultats sont notés dans le Tableau I.

C. A titre de comparaison, on mesure la perméabilité à la vapeur d'eau d'un film polyuréthane à base polyéther d'épaisseur égale à environ 51 μm dans les mêmes conditions qu'en A.

La densité du polyuréthane est égale à 1,12, sa dureté Shore A mesurée selon la norme ASTM D 2240 est égale à 85 et sa plage de fusion est comprise entre 190 et 220°C.

Les résultats sont notés dans le Tableau I.

D. Dans les mêmes conditions que décrites en A, on réalise un film de même composition qu'en A d'épaisseur égale à environ 30 μm.

On mesure la perméabilité à la vapeur d'eau et la résistance évaporative de ce film dans les mêmes conditions qu'en A.

Les résultats sont réunis dans le Tableau II.

EXEMPLE 2

A. On réalise un film à base de polyétheresteramide d'épaisseur égale à environ 75 μm dans les mêmes conditions opératoires que celles décrites dans l'EXEMPLE 1.

Le polyétheresteramide est obtenu par copolycondensation de séquences de PA-12 $\alpha,\omega$ dihydroxylées de $\overline{Mn}$ = 2000, et de séquences de PTMG $\alpha, \omega$ dihydroxylées de $\overline{Mn}$ = 2000.

Le polyétheresteramide est composé de 50 % en poids de PA-12 et de 50 % en poids de PTMG.

On teste la perméabilité à la vapeur d'eau du film précédemment décrit à 22 ± 2°C et à 38 ± 1°C de la même façon que dans l'EXEMPLE 1.

Les résultats sont exprimés en g. mm/m$^2$. 24h et en g/m$^2$.24h et réunis dans le Tableau I.

B. Dans les mêmes conditions que décrites en A, on réalise un film de même composition qu'en A mais d'épaisseur égale à environ 107 μm. On mesure la perméabilité à la vapeur d'eau de ce film dans les mêmes conditions que décrites sous A.

Les résultats sont réunis dans le Tableau I.

C. Dans les mêmes conditions que décrites sous A, on réalise un film de même composition qu'en A mais ayant une épaisseur égale à environ 185 μm. On mesure la perméabilité à la vapeur d'eau de ce film dans les mêmes conditions qu'en A.

Les résultats sont réunis dans le Tableau I.

D. Dans les mêmes conditions que décrites sous A, on réalise un film de même composition mais ayant une épaisseur égale à environ 12 μm.

On mesure la perméabilité à la vapeur d'eau et la résistance évaporative de ce film dans les mêmes conditions que sous A.

Les résultats sont réunis dans le Tableau II.

E. Dans les mêmes conditions que décrites sous A, on réalise un film de même composition mais ayant une épaisseur égale à environ 18 μm.

On mesure la perméabilité à la vapeur d'eau et la résistance évaporative de ce film dans les mêmes conditions que sous A.

Les résultats sont réunis dans le Tableau II.

EXEMPLE 3

A. On réalise un film à base de polyétheresteramide d'épaisseur égale à environ 30 μm dans les mêmes conditions opératoires que celles décrites dans l'EXEMPLE 1.

Le polyétheresteramide utilisé est obtenu par copolycondensation de séquences de PA-12 $\alpha, \omega$ dicarboxylées de $\overline{Mn}$ = 850, et de séquences de PTMG $\alpha, \omega$ dihydroxylées de $\overline{Mn}$ = 2000.

Le polyétheresteramide est composé de 30 % en poids de séquences polyamides et de 70 % en poids de séquences polyéthers.

On mesure la perméabilité à la vapeur d'eau dudit film et sa résistance évaporative conformément aux normes décrites que dans l'EXEMPLE 1.A.

Les résultats sont réunis dans le Tableau II.

B. Dans les mêmes conditions qu'en A, on réalise un film de même composition qu'en A mais dont l'épaisseur est égale à environ 50 μm.

On mesure la perméabilité à la vapeur d'eau du film ci-dessus et sa résistance évaporative dans les mêmes conditions que celles décrites sous A.

Les résultats sont réunis dans le Tableau II.

EXEMPLE 4

A. On réalise un film à base de polyétheresteramide d'épaisseur égale à 12 μm dans les mêmes conditions opératoires que celles décrites dans l'EXEMPLE 1.

Le polyétheresteramide utilisé est obtenu par copolycondensation de séquences de PA-12 α, ω dicarboxylées de $\overline{Mn}$ = 2000, et de séquences de PTMG α, ω dihydroxylées de $\overline{Mn}$ = 1000.

Le polyétheresteramide est composé de 67 % en poids de séquences polyamides et de 33 % en poids de séquences polyéthers.

On mesure la perméabilité à la vapeur d'eau et sa résistance évapotive conformément aux normes décrites dans l'EXEMPLE 1.A.

Les résultats sont réunis dans le Tableau II.

B. Dans les mêmes conditions que décrites sous A, on réalise un film de même composition mais ayant une épaisseur égale à environ 18 μm.

On mesure la perméabilité à la vapeur d'eau et la résistance évaporative de ce film dans les mêmes conditions sous A.

Les résultats sont réunis dans le Tableau II.

EXEMPLE 5

A. On réalise un film à base de polyétheresteramide d'épaisseur égale à 12 μm dans les mêmes conditions opératoires que celles décrites dans l'EXEMPLE 1.

Le polyétheresteramide utilisé est obtenu par copolycondensation de séquences de PA-12 α, ω dicarboxylées de $\overline{Mn}$ = 4000, et de séquence de PTMG α, ω dihydroxylées de $\overline{Mn}$ = 1000.

Le polyétheresteramide est composé de 80 % en poids de séquences polyamides et de 20 % en poids de séquences polyéthers.

On mesure la perméabilité à la vapeur d'eau et la résistance évaporatrice du film conformément aux normes décrites dans l'EXEMPLE 1.A.

Les résultats sont réunis dans le Tableau II.

B. Dans les mêmes conditions que décrites sous A, on réalise un film de même composition mais ayant une épaisseur égale à environ 18 μm.

On mesure la perméabilité à la vapeur d'eau et la résistance évaporative de ce film dans les mêmes conditions sous A.

Les résultats sont réunis dans le Tableau II.

C. Dans les mêmes conditions que décrites sous A, on réalise un film de même composition mais ayant une épaisseur égale à environ 30 μm.

On mesure la perméabilité à la vapeur d'eau et la résistance évaporative de ce film dans les mêmes conditions sous A.

Les résultats sont réunis dans le Tableau II.

EXEMPLE 6

A. On réalise un film à base de polyétheresteramide d'épaisseur égale à 12 μm dans les mêmes conditions opératoires que celles décrites dans l'EXEMPLE 1.

Le polyétheresteramide utilisé est obtenu par copolycondensation de séquences de PA-12 α, ω dicarboxylées

de $\overline{Mn}$ = 5000, et de séquence de PTMG $\alpha$, $\omega$ dihydroxylées de $\overline{Mn}$ = 650. Le polyétheresteramide est composé de 88 % en poids de séquences polyamides et de 12 % en poids de séquences polyéthers.

On mesure la perméabilité à la vapeur d'eau et la resistance évaporatrice du film de la même façon que conformément aux normes décrites dans l'EXEMPLE 1.A.

Les résultats sent réunis dans le Tableau II.

B. Dans les mêmes conditions que décrites sous A, on réalise un film de même composition mais ayant une épaisseur égale à environ 18 μm.

On mesure la perméabilité à la vapeur d'eau et la résistance évaporative de ce film dans les mêmes conditions que sous A.

Les résultats sont réunis dans le Tableau II.

C. Dans les mêmes conditions que décrites sous A, on réalise un film de même composition mais ayant une épaisseur égale à environ 30 μm.

On mesure la perméabilité à la vapeur d'eau et la résistance évaporative de ce film dans les mêmes conditions que sous A.

Les résultats sont réunis dans le Tableau II.


EXEMPLE 7

A. On réalise un film à base de polyétheresteramide d'épaisseur égale à environ 70 μm dans les mêmes conditions opératoires que celles décrites dans l'EXEMPLE 1.

Le polyétheresteramide utilisé est obtenu par copolycondensation de séquences de PA-12 $\alpha,\omega$ dicarboxylées de $\overline{Mn}$ = 650 et de séquences de PEG $\alpha,\omega$ dihydroxylées de $\overline{Mn}$ = 1500.

Le polyétheresteramide est composé de 30 % en poids de séquences polyamides et de 70 % en poids de séquences polyéthers.

On mesure la perméabilité à la vapeur d'eau du film précédemment décrit selon le test mis au point par la demanderesse tel que décrit dans l'EXEMPLE 1.A.

Les résultats sont réunis dans le Tableau I.


EXEMPLE 8

A. On réalise un film à base de polyétheresteramide d'épaisseur égale à environ 78 μm dans les mêmes conditions opératoires que celle décrites dans l'EXEMPLE 1.

Le polyétheresteramide utilisé est obtenu par copolycondensation de séquences de PA-12 $\alpha,\omega$ dicarboxylées de $\overline{Mn}$ = 1500, et de séquences de PEG $\alpha,\omega$ dihydroxylées de $\overline{Mn}$ = 1500.

Le polyétheresteramide est composé de 50 % en poids de séquences polyamides et de 50 % en poids de séquences polyéthers.

On mesure la perméabilité à la vapeur d'eau du film selon le test mis au point par la demanderesse décrit que dans l'EXEMPLE 1.A.

Les résultats sont réunis dans le Tableau I.

B. Dans les mêmes conditions qu'en A, on réalise un film de même composition qu'en A mais dont l'épaisseur est égale à environ 18 μm.

On mesure la perméabilité à la vapeur d'eau et la résistance évaporative du film ci-dessus conformément aux normes décrites dans l'EXEMPLE 1.A.

Les résultats sont réunis dans le Tableau II.

C. Dans les mêmes conditions qu'en A, on réalise un film de même composition qu'en A mais dont l'épaisseur est égale à environ 50 μm.

On mesure sa perméabilité et sa résistance évaporative dans les mêmes conditions qu'en B.

Les résultats sont réunis dans le Tableau II.

D. Dans les mêmes conditions qu'en A, on réalise un film de même composition qu'en A mais dont l'épaisseur est égale à environ 100 μm.

On mesure sa perméabilité et sa résistance évaporatrice dans les mêmes conditions qu'en B.

Les résultats sont réunis dans le Tableau II.

<u>EXEMPLE 9</u>

A. On réalise un film à base de polyétheresteramide d'épaisseur égale à environ 100 µm dans les mêmes conditions opératoires que celle décrites dans l'EXEMPLE 1.

Le polyétheresteramide utilisé est obtenu par copolycondensation de séquences de PA-12 $\alpha,\omega$ dicarboxylées de $\overline{Mn}$ = 4500, et de séquences de PEG $\alpha,\omega$ dihydroxylées de $\overline{Mn}$ = 1500.

Le polyétheresteramide est composé de 75 % en poids de séquences polyamides et de 25 % en poids de séquences polyéthers.

On mesure la perméabilité à la vapeur d'eau du film selon le test mis au point par la demanderesse décrit dans l'EXEMPLE 1.A.

Les résultats sont réunis dans le Tableau I.

B. Dans les mêmes conditions qu'en A, on réalise un film de même composition qu'en A mais dont l'épaisseur est égale à environ 18 µm.

On mesure la perméabilité à la vapeur d'eau et la résistance évaporatrice du film ci-dessus selon les normes décrites dans l'EXEMPLE 1.A.

Les résultats sont réunis dans le Tableau II.

C. Dans les mêmes conditions qu'en A, on réalise un film de même composition qu'en A mais dont l'épaisseur est égale à environ 50 µm.

On mesure sa perméabilité et sa résistance évaporatrice dans les mêmes conditions qu'en B.

Les résultats sont réunis dans le Tableau II.

D. A titre de comparaison, on utilise un film polyuréthane à base polyester d'épaisseur égale à environ 100 µm dont on mesure la perméabilité à la vapeur d'eau dans les mêmes conditions que décrites en A.

La densité du polyuréthane est égale à 1,19, sa dureté Shore A mesurée selon la norme ASTM D 2240 est égale à 86, et sa plage de fusion est comprise entre 200 et 230°C.

Les résultats sont réunis dans le Tableau I.

E. A titre de comparaison, on mesure la perméabilité à la vapeur d'eau d'un film polyuréthane à base polyéther d'épaisseur égale à environ 104 µm dans les mêmes conditions que décrites en A.

La densité du polyuréthane utilisé est égale à 1,12, sa dureté Shore A mesurée selon la norme ASTM D 2240 est égale à 85 et sa plage de fusion est comprise entre 190 et 220°C.

Les résultats sont réunis dans le Tableau I.

<u>EXEMPLE 10</u>

A. On réalise un film à base de polyétheresteramide dans les mêmes conditions opératoires que décrites dans l'EXEMPLE 1 d'épaisseur égale à environ 18 µm.

Le polyétheresteramide est obtenu par copolycondensation de séquences de coPA 6/12 et de séquences de copolyéther PPG/PTMG.

Le coPA 6/12 de $\overline{Mn}$ = 1300 est constitué de 50 % en poids de PA-6 et de 50 % en poids de PA-12.

Le copolyéther est constitué de 80 % en poids de PPG de $\overline{Mn}$ = 600 et de 20 % en poids de PTMG de $\overline{Mn}$ = 650.

Le polyétheresteramide est composé de 66 % en poids de séquences copolyamides et de 34 % en poids de séquences copolyéthers.

On mesure la perméabilité à la vapeur d'eau et la résistance évaporatrice du film selon les normes définies dans l'EXEMPLE 1.A.

Les résultats sont réunis dans le Tableau II.

B. Dans les mêmes conditions qu'en A, on réalise un film de même composition qu'en A mais dont l'épaisseur est égale à environ 30 µm.

On mesure sa perméabilité et sa résistance évaporatrice dans les mêmes conditions qu'en A.

Les résultats sont réunis dans le Tableau II.

<u>Mesure de la reprise d'humidité</u>

On réalise des éprouvettes de différents polyétheresteramides de dimensions 1,6 X 40 X 170 mm et l'on teste leur reprise à l'humidité après 24 heures d'immersion dans l'eau à 23°C.

On teste également la reprise à l'humidité d'éprouvettes de dimensions 50 X 50 X 4 mm après 15 jours à 23°C sous 50 % d'humidité relative (HR).

Les résultats sont réunis dans le Tableau III et sont exprimés en pourcentages en poids par rapport au poids initial de l'échantillon.

TABLEAU I

| EX | EPAISSEUR DU FILM ($\mu$m) | COMPOSI- TION DU FILM | PERMEABILITE A LA VAPEUR D'EAU | | | |
|---|---|---|---|---|---|---|
| | | | à 22 ± 2°C | | à 38 ± 1°C | |
| | | | g.mm/m$^2$ .24 h | g/m$^2$ .24h | g.mm/m$^2$ .24 h | g/m$^2$ .24h |
| 1.A | 55 | Polyétheresteramide | 11,5 | 209 | a | a |
| 1.B (COMPA) | 53 | Polyuréthane à base polyester | 8,5 | 160 | 20 | 408 |
| 1.C (COMPA) | 51 | Polyuréthane à base polyéther | 8 | 157 | 22 | 426 |
| 2.A | 75 | Polyétherese-ramide | 14 | 187 | 46 | 613 |
| 2.B | 107 | Polyétherese-ramide | 14 | 131 | 50 | 463 |
| 2.C | 185 | Polyétherese-ramide | 16,5 | 89 | 59 | 322 |
| 7 | 70 | Polyétherese-ramide | 20 | 286 | a | a |
| 8.A | 78 | Polyétherese-ramide | 19,2 | 246 | a | a |
| 9.A | 100 | Polyétherese-ramide | 11,9 | 119 | 51 | 537 |
| 9.D (COMPA) | 100 | Polyuréthane à base polyester | 10 | 100 | 26 | 255 |
| 9.E (COMPA) | 104 | Polyuréthane à base polyéther | 9,5 | 91 | 25 | 263 |

**a = trop perméable (condensation sur les appareils)**

TABLEAU II

| EX N° | EPAISSEUR (µm) | Ret X $10^3$ m$^2$.mbar/W | PERMEABILITE A LA VAPEUR D'EAU g/m$^2$/24 h |
|---|---|---|---|
| 1.A | 55 | 554 | 1310* |
| 1.D | 30 | 240 | 2510* |
| 2.D | 12 | 458 | 1430* |
| 2.E | 18 | 608 | 1280* |
| 3.A | 30 | 453 | 1890* |
| 3.B | 50 | 758 | 940* |
| 4.A | 12 | 580 | 1180* |
| 4.B | 18 | 845 | 830* |
| 5.A | 12 | 1061 | 610* |
| 5.B | 18 | 1901 | 310* |
| 5.C | 30 | 1412 | 580* |
| 6.A | 12 | 2803 | 220* |
| 6.B | 18 | 2804 | 270* |
| 6.C | 30 | 3793 | 1560* |
| 8.B | 18 | 65 | 5350 |
| 8.C | 50 | 89 | 4880 |
| 8.D | 100 | 172 | 4180 |
| 9.B | 18 | 113 | 3630 |
| 9.C | 50 | 315 | 2550 |
| 10.A | 18 | 644 | 1000 |
| 10.B | 30 | 796 | 810 |

* Forte condensation à la surface d'éprouvette

TABLEAU III

| Type de Polyétheresteramide | Reprise d'humidité (%) | |
|---|---|---|
| | 24 h/eau à 23°C | 15jrs à 23°C 50 % HR |
| EX 1 | 1,25 | |
| EX 2 | 1,12 | |
| EX 3 | 1,25 | |
| EX 4 | 0,93 | |
| EX 5 | 0,51 | |
| EX 6 | 0,33 | |
| EX 7 | 109 | 1,8 |

TABLEAU III (suite)

| Type de Polyétherestera-mide | Reprise d'humidité (%) | |
|---|---|---|
| | 24 h/eau à 23°C | 15jrs à 23°C 50 % HR |
| EX 8 | 48 | 1,4 |
| EX 9 | 12 | 0,9 |
| EX 10 | 3,5 | 1,3 |
| X | 120 | 4,5 |
| Le polyétheresteramide X est constitué de 50 % en poids de séquences de PA-6 de $\overline{Mn}$ = 1500 et de 50 % en poids de séquences de PEG de $\overline{Mn}$ = 1500. | | |

## Revendications

1. "Matériau perméable à la vapeur d'eau et imperméable à l'eau comprenant

    (i) un film d'un élastomère thermoplastique à base de polyétheresteramide
    (ii) associé par collage à chaud ou à l'aide d'un agent de collage approprié à un tissu, à du cuir ou à une matière plastique".

2. Matériau selon la revendication 1, caractérisé en ce que la reprise à l'humidité du Film après 24 heures d'immersion dans l'eau à 23°C est inférieure à 120 % de son poids initial.

3. Matériau selon la revendication 2, caractérisé en ce que la reprise à l'humidité est inférieure à 110 % et de préférence inférieure à 50 %.

4. Matériau selon l'une quelconque des revendications 1 à 3, caractérisé en ce que le Film est en polyéther bloc amide dont les séquences polyéthers contiennent du polyéthylène glycol, homo- ou copolymérisé.

5. Matériau selon la revendication 4, caractérisé en ce que les séquences polyamides contiennent du PA-11 et/ou du PA-12 et/ou du PA-12,12 homo- ou copolymérisé.

6. Matériau selon l'une quelconque des revendications 1 à 5, caractérisé en ce que le Film contient jusqu'à 60 % en poids de charges et additifs divers.

7. Matériau selon l'une quelconque des revendications 1 à 6, caractérisé en ce que l'épaisseur du Film est inférieure à 250 μm.

8. Matériau selon la revendication 7, caractérisé en ce que l'épaisseur du Film est comprise entre 8 et 150 μm.

9. Matériau selon la revendication 8, caractérisé en ce que l'épaisseur du Film est comprise entre 8 et 100 μm, et de préférence entre 8 et 60 μm.

## Claims

1. Material which is permeable to water vapour and impermeable to water, comprising

    (i) a film of a thermoplastic elastomer based on polyether ester amide
    (ii) asociated, by hot-bonding or with the aid of an appropriate bonding agent, with a fabric, leather, or a plastics material.

2. Material according to Claim 1, characterized in that the moisture regain of the film after 24 hours' immersion in water at 23°C is less than 120 % of its initial weight.

3. Material according to Claim 2, characterized in that the moisture regain is less than 110 % and preferably less than 50 %.

4. Material according to any one of Claims 1 to 3, characterized in that the film is made of polyether block amide in which the polyether sequences contain homo- or copolymerized polyethylene glycol.

5. Material according to Claim 4, characterized in that the polyamide sequences contain PA-11 and/or PA-12 and/or PA-12,12 homo- or copolymerized.

6. Material according to any one of Claims 1 to 5, characterized in that the film contains up to 60 % by weight of various fillers and additives.

7. Material according to any one of Claims 1 to 6, characterized in that the thickness of the film is less than 250 µm.

8. Material according to Claim 7, characterized in that the thickness of the film is between 8 and 150 µm.

9. Material according to Claim 8, characterized in that the thickness of the film is between 8 and 100 µm, and preferably between 8 and 60 µm.

**Patentansprüche**

1. Wasserdampfdurchlässiges und wasserundurchlässiges Material enthaltend

    (i) einen thermoplastischen Elastomerfilm auf Basis von Polyetheresteramid
    (ii) verbunden mit einem textilen Gebilde, mit Leder oder mit einem Kunststoff durch Heißkleben oder mit Hilfe eines geeigneten Klebemittels.

2. Material nach Anspruch 1, dadurch gekennzeichnet, daß die Feuchtigkeitsaufnahme des Films nach 24-ständigem Eintauchen in Wasser mit 23 °C kleiner ist als 120 % seines urprünglichen Gewichts.

3. Material nach Anspruch 2, dadurch gekennzeichnet, daß die Feuchtigkeitsaufnahme kleiner als 110 %, vorzugsweise kleiner als 50 %, ist.

4. Material nach einem der Ansprüche 1 bis 3, dadurch gekennzeichnet, daß der Film ein Blockpolyetheramid ist, dessen Polyetherblöcke homo- oder copolymerisiertes Polyethylenglykol enthält.

5. Material nach Anspruch 4, dadurch gekennzeichnet, daß die Polyamidblöcke homo- oder copolymerisiertes PA-11 und/oder PA-12 und/oder PA-12,12 enthalten.

6. Material nach einem der Ansprüche 1 bis 5, dadurch gekennzeichnet, daß der Film bis zu 60 Gew.-% diverse Füllstoffe und Additive enthält.

7. Material nach einem der Ansprüche 1 bis 6, dadurch gekennzeichnet, daß die Filmdicke kleiner als 250 µm ist.

8. Material nach Anspruch 7, dadurch gekennzeichnet, daß die Filmdicke zwischen 8 und 150 µm liegt.

9. Material nach Anspruch 8, dadurch gekennzeichnet, daß die Filmdicke zwischen 8 und 100 µm, vorzugsweise zwischen 8 und 60 µm, liegt.